# EUROPEAN PATENT SPECIFICATION

(11) **EP 2 263 422 B1**
(45) Date of publication and mention of the grant of the patent: **09.11.2011**
(21) Application number: 08719409.8
(22) Date of filing: 01.04.2008
(51) Int. Cl.: H05B 39/04, H05B 41/298, H05B 41/292, H05B 41/285

(54) **Electronic converter circuit with improved protection device and corresponding method**
Elektronische Wandlerschaltung mit verbesserter Schutzvorrichtung und entsprechendes Verfahren
Convertisseur électronique avec un dispositif de protection amélioré et procédé correspondant

(43) Date of publication of application: 22.12.2010
(73) Proprietor: Osram AG, 81543 München (DE); OSRAM S.P.A. - SOCIETA' RIUNITE OSRAM EDISON CLERICI, 20126 Milano (IT)
(72) Inventor: FACCIN, Marco, 31031 Caerano San Marco (IT); PIVA, Raffaele, 31100 Treviso (IT)
(74) Representative: Bosotti, Luciano
(86) International application number: PCT/IB2008/000801
(87) International publication number: WO 2009/122232

(56) References cited:
- EP-A- 1 811 816

## Description

### Field of the invention

This disclosure relates to an electronic converter circuit with an improved protection device.

### Description of the related art

Document EP-A-1 811 816 (after which the preamble of Claim 1 was patterned) discloses an arrangement for integrating a DC and AC overload/thermal protection scheme in electronic transformers for e.g. halogen lamps.

These devices may be connected to a mains power supply via a dimmer in order to regulate the brightness of the light source(s) driven thereby like a classical incandescent lamp. Ensuring proper operation of such an arrangement may however turn out to be critical especially when the light source is regulated to a minimum brightness value.

The block diagram of Figure 1 reproduces to a wide extent the block diagram of Figure 3 of EP-A-1 811 816, which will again be described in the following. Additionally, Figure 1 herein explicitly indicates the presence of an Energy Supplier Stage (EST), generally designated P, which produces a voltage Vcc to supply the two operational amplifiers 10 and 32 shown in the diagram. The energy to charge a supply capacitor Cs may be achieved from a continuous voltage Vbus (derived for m the input stages of the converter) or from a high frequency AC voltage Vpump produced by voltage pump circuitry during normal operation of the device.

The voltage Vbus guarantees the Vcc supply also when the device is in protection state, that is when Vpump is reduced to zero.

A dimmer possibly associated with a converter as shown typically operates by "chopping" the AC mains phase, so that when the light source driven by the converter is regulated to a minimum brightness value the ballast works for a small time (1-2 ms every 10 ms). Under these circumstances, ensuring correct operation of the Energy Supplier Stage (EST) may be difficult, and Vcc may drop down to a very low value (even without becoming to zero).

If Vcc drops, also the reference value designated Vref(T°) as supplied to the inverting input 12 of the operational amplifier (comparator) 10 may drop significantly and thus become smaller than the voltage on the non-inverting input 14 so the output signal Vo from the operational amplifier 10 goes high.

All this may occur while the voltage Vcc is still greater than zero of an amount sufficient to cause the switches Td1 and Td2 to be activated so that the ballast shuts down (i.e. the converter is switched off). This results in an unacceptable flickering of the lamp(s) driven by the converter.

This drawback might be notionally avoided by improving the Energy Supplier Stage P in such a way to provide sufficient energy even if and when the ballast operates over a short portion of the mains sine wave. This approach would however entail a relevant increase of the requirements imposed on the internal components of that stage, which in turn would translate into an increase in terms of cost and space occupied on the PC-board.

### Object and summary of the invention

The object of the invention is thus to provide an improved arrangement that dispenses with the drawbacks outlined in the foregoing.

According to the present invention, such an object is achieved by means of a circuit having the features set forth in claim 1 that follows. The invention also relates to a corresponding method as set forth in claim 7.

The claims are an integral part of the disclosure of the invention provided herein.

### Brief description of the annexed drawings

The invention will now be described, by way of example only, with reference to the enclosed figures of drawing, wherein:
- Figure 1, which was already partly discussed in the foregoing, is a block diagram of an exemplary electronic converter incorporating the improvement described herein, and
- Figure 2 further details an exemplary embodiment of one of the blocks in the diagram of Figure 1.

### Detailed description of exemplary embodiments

In the following description, numerous specific details are given to provide a thorough understanding of embodiments. The embodiments can be practiced without one or more of the specific details, or with other methods, components, materials, etc. In other instances, well-known structures, materials, or operations are not shown or described in detail to avoid obscuring aspects of the embodiments.

Reference throughout this specification to "one embodiment" or "an embodiment" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The headings provided herein are for convenience only and do not interpret the scope or meaning of the embodiments.

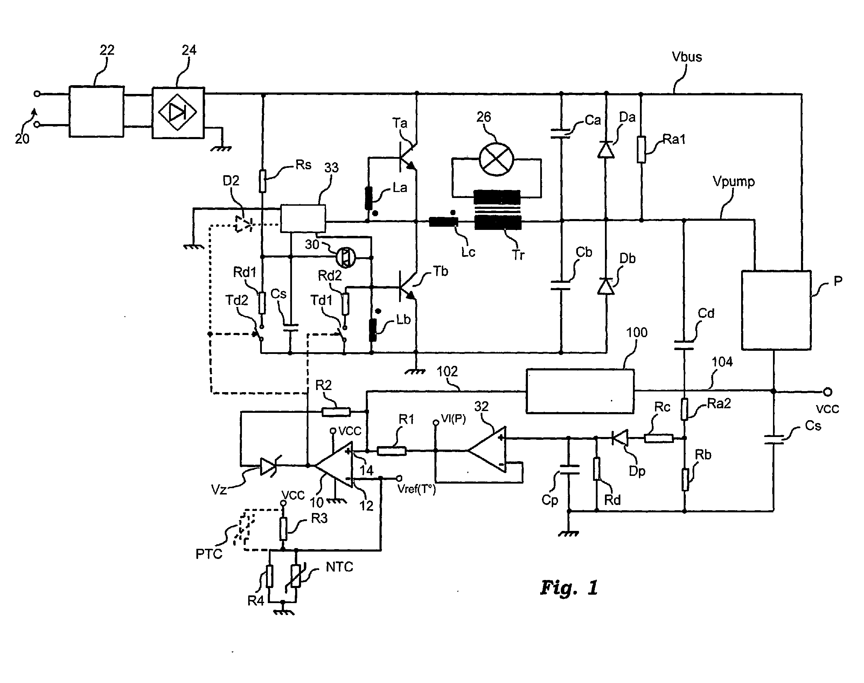

The block diagram of Figure 1 reproduces to a wide extent the block diagram of Figure 3 of EP-A-1 811 816. The description of that earlier application is thus explicitly referred to for a thorough description of the structure and operation of the elements and components disclosed therein.

For the sake of this disclosure, it will suffice to recall the converter illustrated in Figure 1 supplies electrical power derived from a power source 20 (e.g. the mains voltage) via a line filter 22 and a half-bridge rectifier 24 to a light source 26 connected to the secondary winding of a transformer Tr. The light source 26 may be comprised e.g. of one or more halogen lamps, fluorescence lamps, high flux LEDs or the like.

This arrangement is exemplary of a switching converter based on a half-bridge topology. This converter layout is per se well known in the art, thus making it unnecessary to provide a more detailed description herein.

The primary winding of the transformer Tr has a polarization inductance Lc, and is driven via a half-bridge arrangement including two electronic switches (e.g. MOSFETs or BJTs) Ta, Tb each having an associated gate inductance La, Lb, and two capacitors Ca, Cb each having an associated protection diode Da, Db.

The two electronic switches Ta, Tb are alternatively switched on and off by means of a control circuit 38 that drives a diac 30. The diac 30 is interposed between the gates of the electronic switches Ta, Tb and the intermediate point of a voltage divider comprised of an "upper" resistor Rs connected to the output of the rectifier 24 and a "lower" resistor Rd1 connectable to ground via a switch Td2. A capacitor Cs is connected in parallel to the resistor Rd1. Another resistor Rd2 is connected to the gate of the electronic switch Tb; the resistor Rd2 is adapted to be connected to ground via a switch Td1.

Both switches Td1 and Td2 are driven by the output voltage Vo of the operational amplifier (op-amp) 10 acting as a comparator, a protection diode D2 (shown in dashed lines) being preferably provided having its anode connected the output voltage Vo of the comparator 10 and its cathode connected to the control circuit 38.

The inverting input 12 of the operational amplifier/comparator 10 receives a signal Vref(T°) in the form of a continuous, temperature dependent voltage, which e.g. decreases as the temperature increases.

The non-inverting input 14 receives a signal in the form of a continuous voltage (produced as better detailed in the following) representative of the load, and thus the power, at the output of converter circuit. Specifically, a load-dependent signal Vi(P) is applied to the non-inverting input 14 via a resistor R1.

Another resistor R2 is connected to the non-inverting input 14. The resistor R2 is series-connected to a zener diode VZ, which is in turn connected to the output Vo of the operational amplifier 10.

In the embodiment shown, the operational amplifier 10 is powered by means of a single supply voltage Vcc.

In an embodiment, a double supply +/- Vcc may be used; a single supply voltage is however easier to obtain than a double supply voltage.

The components 10, R1, R2 and Dz form a circuit whose output Vo is used to de-activate the converter when Vo reaches a value Voh as a result of an anomalous current and/or temperature load being detected.

The zener diode Dz having its cathode connected to the output of the comparator 10 can be regarded as equivalent to the parallel connection of a voltage source Vb (with Vb being the avalanche voltage of the zener diode) and a diode Do having a forward voltage equal to V.

The circuit comprised of the components Rs, Cs and the Diac 30 allows the ignition of the half-bridge at each zero point of the supply voltage. At the intermediate point between Ca and Cb there is a DC voltage having superimposed thereon a high (oscillation) frequency ripple, whose amplitude depends on the load applied at the converter output.

This dependence may be used to generate the load-dependent signal Vi(P) for feeding the non-inverting input 14 of the comparator 10. The related sensing arrangement includes, in addition to a first resistor Ra1 connected in parallel to a diode Da, a capacitor Cd connected to the secondary winding of the transformer Tr plus a network essentially comprised of two resistors Ra2 and Rb that form a voltage divider interposed between the capacitor Cd and ground.

The voltage divider comprised of the resistors Ra2 and Rb scales the ripple signal present at the intermediate point between the capacitors Ca and Cb and feeds it, via a resistor Rc, to a quasi peak-detector network including a diode Dp loading a RC network. The RC network includes the parallel connection of a capacitor Cp and a resistor Rd that jointly define the charge and discharge time constants of the detector. As a result, the continuous voltage across the capacitor Cp is representative of (in fact, proportional to) the load applied at the converter output (i.e. the transformer Tr).

A further operational amplifier 32 acting as a voltage-follower (i.e an impedance separator) is used to transfer that signal as the load-dependent signal Vi(P) applied, via the resistor R1, to the non-inverting input 14 of the comparator 10.

Another voltage divider interposed between the supply voltage Vcc and ground includes two resistors R3 and R4 having a NTC (Negative Temperature Coefficient) resistor in parallel to R4 - as shown in full line - and/or a PTC (Positive Temperature Coefficient) resistor in parallel to R3 - as shown in dashed line - to produce the temperature-dependent signal Vref(T°) to be applied to the inverting input 12 of the comparator 10. In the exemplary embodiment considered herein the signal Vref(T°) decreases with an increase in the temperature.

The fixed resistors R3 and R4 in parallel to the NTC and/or the PTC resistors linearize the thermal voltage/temperature characteristics of the NTC/PTC resistors and to smoothen out tolerances.

In the diagram of figure 1, the connections from the output of comparator 10 to the switches Td1 and Td2 are shown in broken lines to indicate that these connections may be provided at option depending on whether the protection sought is intended to operate only in the presence of an AC supply of the converter or also in the presence of a DC supply respectively.

The resistors Rd2 and Rd1 represent the natural resistance that an active component, such as a MOSFET or a BJT, shows at its output.

If a low impedance path is present in parallel to the capacitor Cs, the half-bridge cannot be re-ignited after the zero of the supply voltage, so that the converter would be stopped. This does not apply in the case of DC operation and a low impedance path is created in parallel to the base and emitter of the "low-side" switch Tb, e. g. by switching on, namely closing, the switch Td1. This impedance may be so low that all the current coming from the diac 30 and/or from the inductor Lb flows through the resistor Rd2, in order to avoid bad re-ignition of Tb or malfunctioning of the half-bridge due e.g. to continued operation of the half-bridge with a bad driving of the MOSFET or BJT Tb, with an ensuing risk of self-destruction due to over-heating.

As indicated, a dimmer possibly associated with a converter as shown in Figure 1 typically operates by "chopping" the AC mains phase, so that when the light source driven by the converter is regulated to a minimum brightness value the ballast works for a small time (1-2 ms every 10 ms). Under these circumstances, Vcc may drop to a very low value, thus reaching and possibly falling below a lower threshold value

If Vcc drops, also the reference value designated Vref(T°) may drop significantly, so that the voltage on the inverting input 12 of the operational amplifier 10 might become smaller than the voltage on the non-inverting input 14, whereby the output signal Vo from the operational amplifier goes high. This might occur while the voltage Vcc is still greater than zero of an amount sufficient to cause the switches Td1 and Td2 to be activated so that ballast shuts down and switches off the converter.

In the improved arrangement illustrated in Figure 1 this drawback is avoided by providing a Vcc Sense Stage 100 interposed between the voltage Vcc and the non-inverting input 14 of the operational amplifier 10.

Specifically, the stage 100 has a floating output 102 connected to the non-inverting input 14 of the operational amplifier 10, so that the stage has no influence during the normal operation of the ballast.

The stage 100 includes an input pin 104 to sense the voltage Vcc. When Vcc drops below a given lower threshold, the output 102 of the stage 100 goes to zero so that the operational amplifier 10 is in any case prevented form being activated, even if Vref(T°) were to drop appreciably.

This arrangement ensures that the protection stage will not adversely affect operation of the ballast, even when this is connected to a dimmer and regulated to the minimum brightness level of the light source driven thereby.

An advantage with this arrangement lies in that it guarantees overload/thermal protection in DC and AC operation while maintaining the possibility to connect the ballast with a conventional dimmer to regulate the light source as a normal incandescent lamp.

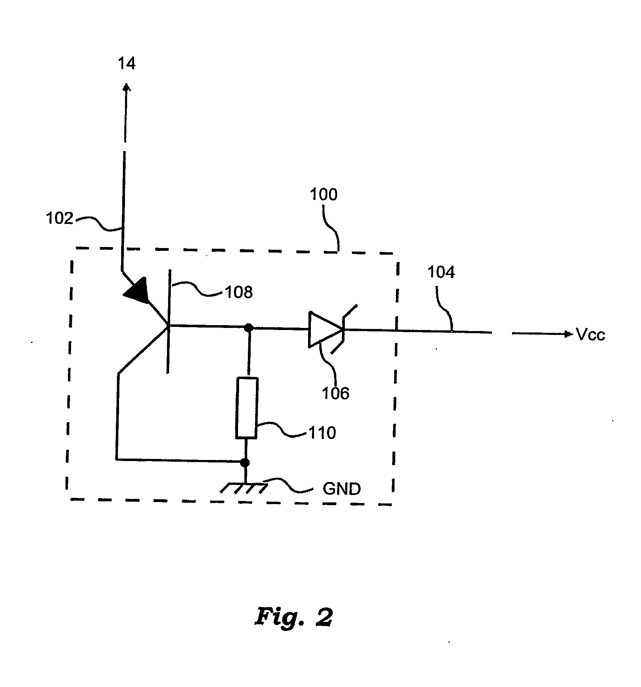

In the exemplary embodiment illustrated in figure 2, the sense stage 100 is implemented using three SMD components, thus avoiding any expensive improvement of the EST stage P.

The components in question are:
- a zener diode 106 whose cathode is connected to the input line 104 that senses Vcc;
- a bipolar p-n-p transistor (BJT) 108 having its base connected to the anode of the zener diode 106 and its emitter connected to the output line 102; and
- a resistor 110 connected between the base and the collector of the transistor 108, which collector is shorted to ground GND.

As long as the voltage VRs across through the resistor 110 (which is Vcc minus the voltage Vdzs across the zener diode 106) is higher than the maximum voltage at the inverting input 12 of the operational amplifier 10, the transistor 108 is cut-off (i.e. blocked) and nothing happens.

When, as a result of dimming the ballast, the voltage Vcc may start to drop and the voltage on the inverting input 12 of the operational amplifier 10 tends (due to its direct proportionality to Vcc) to become lower than the voltage on the non-inverting input 14, the transistor 108 is activated because the voltage across the resistor 110 becomes sufficiently lower (V14 + Vγ represents the threshold value) than the voltage of the non-inverting input 14 of the operational amplifier 10. When activated (i.e. made conductive) the transistor 108 "pulls" to ground GND the non-inverting input 14 of the operational amplifier 10 which goes immediately to zero disabling the output Vo.

The zener diode 106 may be selected to guarantee that when voltage at the non-inverting input 14 of the operational amplifier 10 reaches its highest value (that means the highest threshold voltage of the Schmitt Trigger arrangement including the comparator 10) the transistor 108 is not activated, thus ensuring that normal operation of the protection stage is not adversely affected.

Without prejudice to the underlying principles of the invention, the details and embodiments may vary, even appreciably, with respect to what has been described by way of example only, without departing from the scope of the invention as defined by the annexed claims.

## Claims

1. An electronic converter circuit with a protection device including a comparator (10) with a supply voltage (Vcc) produced by an energy supplier stage (P) present in the converter, said comparator (10) having an output (Vo), a non-inverting (14) input and an inverting input (12), said non-inverting (14) and inverting (12) inputs sensitive to a first signal (Vi(P)) indicative of the output load of said converter and a second signal (Vref(T°)) indicative of the temperature of said converter, whereby said output (Vo) is switcheable to switch off said electronic converter as a function of the values of said first (Vi(P)) and second (Vref(T°) signals,
the circuit **characterized by** a sensing stage (100) interposed between said supply voltage (Vcc) and said non-inverting input (14) of said comparator (10), said sensing stage (100) having an input (104) sensitive to said supply voltage (Vcc) dropping and reaching a lower threshold value as a result of dimming the converter, and an output (102) actuatable to prevent said output (Vo) of said comparator (10) from switching off said electronic converter when said supply voltage (Vcc) reaches said lower threshold value.

2. The circuit of claim 1, wherein, when said supply voltage (Vcc) is above said lower threshold, said sensing stage (100) has a floating output (102) connected to said non-inverting input (14) of said comparator (10).

3. The circuit of either of claims 1 or 2, wherein the output (102) of said sensing stage (100) is forceable to zero when said supply voltage (Vcc) reaches said lower threshold.

4. The circuit of any of claims 1 to 3, wherein said sensing stage (100) includes an electronic switch (108) switcheable to connect to ground (GND) the output (102) of said sensing stage (100) when said supply voltage (Vcc) reaches said lower threshold.

5. The circuit of claim 4, wherein said electronic switch (108) is a bipolar transistor.

6. The circuit of any of the previous claims, wherein said sensing stage (100) includes:
- a zener diode (106) having its cathode connected to the input (104) of said sensing stage (100) to sense said supply voltage (Vcc);
- a bipolar transistor (108) having its base connected to the anode of said zener diode (106) and its emitter and collector connected between the output (102) of said sensing stage (100) and ground (GND);
- a resistor (110) connected between the base of said transistor (108) and ground (GND).

7. A method of protecting an electronic converter circuit by means of a comparator (10) having an output (Vo), a non-inverting input (14) and an inverting input (12), the method including the steps of applying to said non-inverting (14) and inverting (12) inputs a first signal (Vi(P)) indicative of the output load of said converter and a second signal (Vref(T°)) indicative of the temperature of said converter, whereby said output (Vo) is switcheable to switch off said electronic converter as a function of the values of said first (Vi(P)) and second signal (Vref(T°), wherein said comparator (10) is powered via a supply voltage (Vcc) produced by an energy supplier stage (P) present in the converter,
the method **characterized in that** it includes the steps of sensing (100) said supply voltage (Vcc) dropping and reaching a lower threshold value as a result of dimming the converter and preventing said output (Vo) of said comparator (10) from switching off said electronic converter when said supply voltage (Vcc) reaches said lower threshold value.

## Patentansprüche

1. Eine elektronische Konverterschaltung mit einer Schutzvorrichtung, umfassend einen Vergleicher (10) mit einer Betriebsspannung (Vcc), die durch einen Energiezufuhrabschnitt (P) in dem Konverter erzeugt wird, wobei der Vergleicher (10) eine Ausgabe (Vo), eine nichtinvertierende (14) Eingabe und eine invertierende Eingabe (12) aufweist, wobei die nichtinvertierenden (14) und invertierenden (12) Eingaben empfindlich sind für ein erstes Signal (Vi (P)), welches für die Ausgabelast des Konverters bezeichnend ist, und für ein zweites Signal (Vref (T°)), welches für die Temperatur des Konverters empfindlich ist, wobei die Ausgabe (Vo) schaltbar ist, um den elektronischen Konverter als Funktion der Werte der ersten (Vi (P)) und zweiten (Vref (T°)) Signale abzuschalten,
die Schaltung ist **gekennzeichnet durch** einen Sensorabschnitt (100) zwischen der Betriebsspannung (Vcc) und der nichtinvertierenden Eingabe (14) des Vergleichers (10), wobei der Sensorabschnitt (100) eine Eingabe (104) aufweist, die empfindlich ist für ein Abfallen und Erreichen eines unteren Schwellwertes der Betriebsspannung (Vcc) aufgrund eines Dimmens des Konverters, und eine Ausgabe (102) aufweist, die betätigbar ist, um die Ausgabe (Vo) des Vergleichers (10) daran zu hindern, den elektronischen Konverter abzuschalten, wenn die Betriebsspannung (Vcc) den unteren Schwellwert erreicht.

2. Schaltung nach Anspruch 1, wobei, wenn die Betriebsspannung (Vcc) oberhalb des unteren Schwellwertes liegt, der Sensorabschnitt (100) eine fließende Ausgabe (102) aufweist, die mit der nichtinvertierten Eingabe (14) des Vergleichers (10) verbunden ist.

3. Schaltung nach entweder Anspruch 1 oder 2, wobei die Ausgabe (102) des Sensorabschnitts (100) auf 0 gebracht werden kann, wenn die Betriebsspannung (Vcc) den unteren Schwellwert erreicht.

4. Schaltung nach irgendeinem der Ansprüche 1 bis 3, wobei der Sensorabschnitt (100) einen elektronischen Schalter (108) aufweist, der schaltbar ist, um die Ausgabe (102) des Sensorabschnitts (100) zu erden (GND), wenn die Betriebsspannung (Vcc) den unteren Schwellwert erreicht.

5. Schaltung nach Anspruch 4, wobei die elektronische Schaltung (108) ein bipolarer Transistor ist.

6. Schaltung nach irgendeinem der vorigen Ansprüche, wobei der Sensorabschnitt (100) aufweist:
- eine Zener-Diode (106), deren Kathode mit der Eingabe (104) des Sensorabschnitts (100) verbunden ist, um die Betriebsspannung (Vcc) zu messen;
- einen bipolaren Transistor (108), dessen Basis mit der Anode der Zener-Diode (106) verbunden ist, und dessen Emitter und Kollektor zwischen der Ausgabe (102) des Sensorabschnitts (100) und der Erde (GND) verbunden ist;
- einen Widerstand (110), der zwischen der Basis des Transistors (108) und der Erde (GND) verbunden ist.

7. Verfahren zum Schützen einer elektronischen Konverterschaltung mittels eines Vergleichers (10) mit einer Ausgabe (Vo), einer nichtinvertierenden Eingabe (14) und einer invertierenden Eingabe (12), wobei das Verfahren die Schritte aufweist, ein erstes Signal (Vi (P)) auf die nichtinvertierende (14) und die invertierende (12) Eingabe aufzubringen, wobei das erste Signal für die Ausgabelast des Konverters bezeichnend ist, und ein zweites Signal (Vref (T°)) aufzubringen, welches für die Temperatur des Konverters bezeichnend ist, wobei die Ausgabe (Vo) schaltbar ist, um den elektronischen Konverter als eine Funktion der Werte des ersten (Vi (P)) und des zweiten Signals (Vref (T°)) auszuschalten, wobei der Vergleicher (10) über eine Betriebsspannung (Vcc) betrieben wird, die durch einen Energiezufuhrabschnitt (P) in dem Konverter erzeugt wird,
wobei das Verfahren **dadurch gekennzeichnet ist, dass** es die Schritte aufweist, ein Abfallen und Erreichen eines unteren Schwellwertes der Betriebsspannung (Vcc) aufgrund eines Dimmens des Konverters zu erfassen (100), und die Ausgabe (Vo) des Vergleichers (10) am Abschalten des elektronischen Konverters zu hindern, wenn die Betriebsspannung (Vcc) den unteren Schwellwert erreicht.

## Revendications

1. Un circuit convertisseur électronique avec un dispositif de protection comprenant un comparateur (10) avec une tension d'alimentation (Vcc) produite par un étage de délivrance d'énergie (P) présent dans le convertisseur, ledit comparateur (10) comportant une sortie (Vo), une entrée non inverseuse (14) et une entrée inverseuse (12), lesdites entrées non inverseuse (14) et inverseuse (12) étant sensibles à un premier signal (Vi(P)) représentatif de la charge de sortie dudit convertisseur et à un second signal (Vref(T°)) représentatif de la température dudit convertisseur, de sorte que ladite sortie (Vo) puisse être commutée afin d'arrêter ledit convertisseur électronique en fonction des valeurs desdits premier (Vi(P)) et second (Vref(T°)) signaux,
le circuit étant **caractérisé par** un étage de détection (100) interposé entre ladite tension d'alimentation (Vcc) et ladite entrée non inverseuse (14) dudit comparateur (10), ledit étage de détection (100) possédant une entrée (104) sensible au fait que ladite tension d'alimentation (Vcc) chute et atteigne une valeur de seuil inférieur suite à une réduction de puissance du convertisseur, et une sortie (102) actionnable pour empêcher que ladite sortie (Vo) dudit comparateur (10) n'arrête ledit convertisseur électronique lorsque ladite tension d'alimentation (Vcc) atteint ladite valeur de seuil inférieur.

2. Le circuit de la revendication 1, dans lequel, lorsque ladite tension d'alimentation (Vcc) est au-dessus dudit seuil inférieur, ledit étage de détection (100) présente une sortie flottante (102) reliée à ladite entrée non inverseuse (14) dudit comparateur (10).

3. Le circuit de l'une ou l'autre des revendications 1 ou 2, dans lequel la sortie (102) dudit étage de détection (100) peut être forcée à zéro lorsque ladite tension d'alimentation (Vcc) atteint ledit seuil inférieur.

4. Le circuit de l'une des revendications 1 à 3, dans lequel ledit étage de détection (100) comprend un commutateur électronique (108) connectable pour relier à la masse (GND) la sortie (102) dudit étage de détection (100) lorsque ladite tension d'alimentation (Vcc) atteint ledit seuil inférieur.

5. Le circuit de la revendication 4, dans lequel ledit commutateur électronique (108) est un transistor bipolaire.

6. Le circuit de l'une des revendications précédentes, dans lequel ledit étage de détection (100) comprend :
- une diode Zener (106) ayant sa cathode reliée à l'entrée (104) dudit étage de détection (100) pour détecter ladite tension d'alimentation (Vcc) ;
- un transistor bipolaire (108) ayant sa base reliée à l'anode de ladite diode Zener (106) et son émetteur et son collecteur reliés entre la sortie (102) dudit étage de détection (100) et la masse (GND) ;
- une résistance (110) reliée entre la base dudit transistor (108) et la masse (GND).

7. Un procédé de protection d'un circuit convertisseur électronique au moyen d'un comparateur (10) possédant une sortie (Vo), une entrée non inverseuse (14), une entrée inverseuse (12), le procédé comprenant les étapes d'application auxdites entrées non inverseuse (14) et inverseuse (12) d'un premier signal (Vi(P)) représentatif de la charge de sortie dudit convertisseur et d'un second signal (Vref(T°)) représentatif de la température dudit convertisseur, de sorte que ladite sortie (Vo) puisse être commutée de manière à arrêter ledit convertisseur électronique en fonction des valeurs desdits premier (Vi(P)) et second (Vref(T°)) signaux, ledit comparateur (10) étant alimenté via une tension d'alimentation (Vcc) produite par un étage de délivrance d'énergie (P) présent dans le convertisseur,
le procédé étant **caractérisé en ce qu'**il comprend les étapes de détection (100) du fait que ladite tension d'alimentation (Vcc) chute et atteint une valeur de seuil inférieur du fait de l'abaissement de puissance du convertisseur et d'empêchement que ladite sortie (Vo) dudit comparateur (10) n'arrête ledit convertisseur électronique lorsque ladite tension d'alimentation (Vcc) atteint ladite valeur de seuil inférieur.
